# FASCICULE DE BREVET EUROPEEN

(11) **EP 0 483 719 B1**
(45) Date de publication et mention de la délivrance du brevet: **31.08.1994**
(21) Numéro de dépôt: 91118336.6
(22) Date de dépôt: 28.10.1991
(51) Int. Cl.: B61H 5/00, F16D 65/847

(54) **Système de freinage pour véhicule ferroviaire**
Bremsanlage für Schienenfahrzeuge
Brake system for railway vehicle

(30) Priorité: 30.10.1990 FR 9013450
(43) Date de publication de la demande: 06.05.1992
(73) Titulaire: GEC ALSTHOM SA, 75116 Paris (FR)
(72) Inventeur: Guiot, Jean-Luc, F-59111 Lieu Saint Amand (FR); Devallez, Alain, F-59590 Raismes (FR)
(74) Mandataire: Weinmiller, Jürgen

(56) Documents cités:
- WO-A-82/04108
- GB-A- 535 191
- GB-A- 2 183 755

## Description

L'invention concerne un système de freinage pour véhicule ferroviaire dont les bogies sont à essieux fixes et à roues indépendantes.

On cherche actuellement à faire rouler les trains à grande vitesse de plus en plus vite. Il est prévu d'atteindre des vitesses commerciales de l'ordre de 400km/h. Ceci pose immédiatement le problème du freinage d'un train à de telles vitesses étant donné la grande énergie à dissiper et la faible adhérence existant entre les roues du train et les rails.

Sur les trains à grande vitesse roulant actuellement, on associe généralement plusieurs moyens de freinage. Ainsi, pour les rames du T.G.V. atteignant des vitesses de l'ordre de 270 km/h, trois moyens de freinage sont prévus :
- d'abord un frein rhéostatique monté sur les essieux moteurs et un frein à disque monté sur les essieux porteurs, ces freins étant utilisés conjointement pour amener le train de la vitesse maximale jusqu'à l'arrêt;
- ensuite un système de freinage, avec semelles sur roues sur les bogies moteurs, ce frein étant utilisé en-dessous de 160 km/h.

Ce système de freinage est efficace pour les trains roulant aux vitesses annoncées. Cependant, il est tout à fait inefficace si on veut l'appliquer à des trains devant circuler à des vitesses beaucoup plus élevées (de l'ordre de 400km/h), le frein à friction étant seul capable d'assurer l'arrêt de la rame.

On connaît d'autre part, dans le domaine de l'aviation et dans celui de l'automobile de course de formule 1, un système de freinage du type frein multidisques en carbone permettant d'assurer sur ces véhicules un freinage efficace. Ce type de frein possède une capacité de dissipation d'énergie très importante.

L'adaptation d'un système de freinage à disques multiples sur un train devant rouler à très grande vitesse n'est cependant pas chose aisée pour plusieurs raisons.

A très grande vitesse, il est impératif de disposer de bogies de grande stabilité, donc à roues indépendantes. Il en découle que, les essieux étant fixes, le freinage doit se faire directement sur les roues ou sur des organes rattachés aux roues. Cependant, il se pose alors le problème de l'évacuation de la chaleur après un freinage. Il faut en effet éviter que la chaleur engendrée par le freinage à proximité des moyeux de roues ne se communique aux roulements des roues. Ceux-ci sont constitués généralement à partir de rouleaux coniques qui sont sensibles à la chaleur. Un dégagement de chaleur trop intense risque de coincer la roue sur son essieu.

Les freins multidisques sont avantageusement du type carbone-carbone pour une meilleure efficacité. On sait que les freins au carbone possèdent une efficacité maximale dans une plage de température comprise entre 300 et 600°C approximativement. Il faudrait donc, qu'au cours d'une opération de freinage, la température des disques de carbone atteignent rapidement une valeur correspondant à un fonctionnement le plus efficace possible mais aussi que cette température ne dépasse pas la gamme de meilleure efficacité.

Il faut donc tout à la fois que les disques de freins puissent être portés rapidement à une température relativement élevée et éviter un échauffement trop important des roulements de roue situés à proximité.

C'est le but de la présente invention de satisfaire ces exigences. Le système de freinage selon l'invention est constitué de plusieurs éléments agencés de façon à constituer un puits de chaleur pour les disques de freinage. Un circuit de refroidissement est prévu pour refroidir le milieu où se trouvent les roulements et pour éviter le trop grand échauffement des disques de freinage.

L'invention a donc pour objet un système de freinage pour véhicule ferroviaire dont les bogies sont à essieux fixes et à roues indépendantes, le freinage étant du type frein à disque, caractérisé en ce que chaque frein comporte des disques multiples comprenant des disques tournants solidaires de la roue à freiner et des disques fixes solidaires de l'essieu portant la roue à freiner, le freinage étant obtenu par application des disques fixes sur les disques tournants, le système comprenant également un circuit de refroidissement permettant de dissiper l'énergie thermique engendrée par le freinage, le refroidissement étant obtenu par circulation forcée d'un fluide dans le circuit.

Avantageusement, les disques tournants peuvent être rendus solidaires de la roue par l'intermédiaire d'un support cylindrique fixé sur la roue, les axes de la roue et du support de disques tournants étant confondus.

De même, les disques fixes peuvent être rendus solidaires de l'essieu par l'intermédiaire d'un support cylindrique fixé sur l'essieu, les axes de l'essieu et du support de disques fixes étant confondus.

L'invention sera mieux comprise et d'autres avantages apparaîtront grâce à la description qui va suivre, donnée à titre non limitatif, accompagnée des dessins annexés parmi lesquels :
- la figure 1 est une vue généralement en coupe d'un demi essieu dont la roue est équipée d'un système de freinage selon l'invention,
- les figures 2 et 3 sont des vues partielles d'éléments du système de freinage selon l'invention.

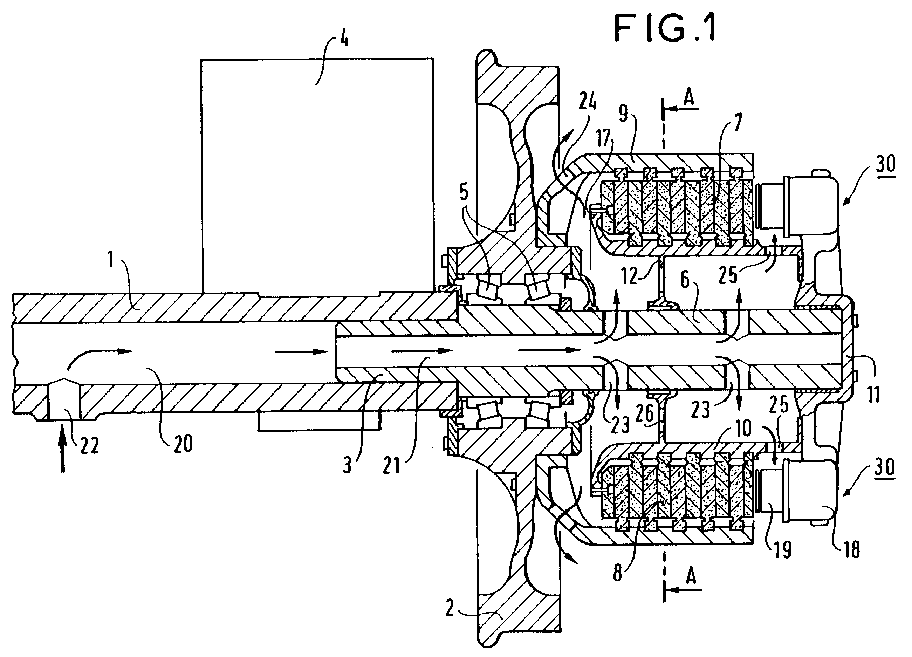

Sur la figure 1, on a représenté une moitié d'un essieu 1 sur laquelle est montée une roue 2 par l'intermédiaire d'une fusée rapportée 3. L'essieu supporte un bogie non représenté par l'intermédiaire de suspensions primaires. Une telle suspension primaire est figurée sous la référence 4. La roue est montée classiquement en butée sur l'épaulement constitué par l'extrémité de l'essieu. Elle peut tourner librement autour de la fusée 3 grâce à des roulements constitués de rouleaux coniques 5.

La fusée 3 se prolonge, sur une certaine longueur au-delà de la roue, en une partie saillante 6. Le système de freinage selon l'invention sera, dans cet exemple d'application, constitué autour de cette partie saillante.

Selon l'invention, le frein comporte des disques multiples comprenant des disques tournants 7 solidaires de la roue à freiner et des disques fixes 8 solidaires de l'essieu 1.

Les disques tournants 7 sont rendus solidaires de la roue par une partie tournante fixée à la roue. Les disques fixes 8 sont rendus solidaires de l'essieu par une partie fixe liée à l'essieu.

Sur la figure 1, la partie tournante est constituée par un support cylindrique 9 fixé par des vis à la partie centrale et externe de la roue 2, les axes du support cylindrique et de la roue étant confondus. Les disques tournants 7 sont disposés à l'intérieur du support cylindrique 9.

La partie fixe est constituée également par un support cylindrique 10 dont l'axe est confondu avec celui de la fusée 6. Les disques fixes 8 sont disposés à la périphérie externe du support cylindrique 10. Ce support 10 est prolongé par une pièce terminale ou est fixé à une pièce terminale 11 comme cela est représenté sur la figure 1. La fixation entre le support 10 et la pièce 11 peut être réalisée par vis, de même que la fixation de la pièce 11 sur l'extrémité de la fusée 6.

Le support cylindrique 10 comporte également un flasque interne 12 en forme de couronne. Ce flasque est glissant juste sur la fusée 6, ce qui assure un positionnement correct du support 10.

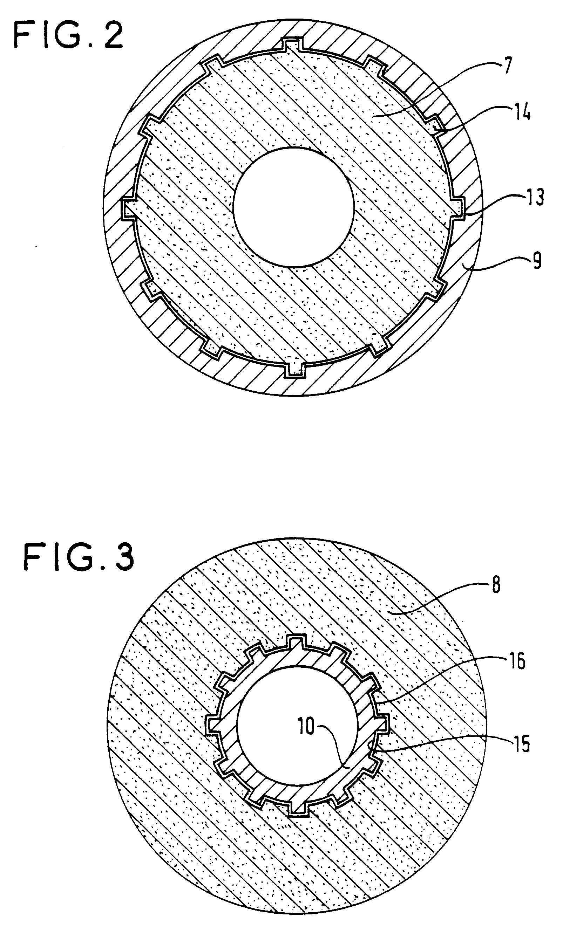

Sur la figure 2, on a représenté une vue du support cylindrique 9 selon une coupe AA. Le support comporte des cannelures 13 usinées longitudinalement dans son volume interne. Les disques tournants 7 comportent des ergots 14 correspondants aux cannelures 13 et situés à la périphérie externe des disques 7. Comme le montre la figure 2, les disques 7 sont entraînés en rotation par le support 9.

Sur la figure 3, on a représenté une vue du support cylindrique 10 selon la même coupe AA. Le support comporte des cannelures 15 usinées longitudinalement dans son volume externe. Les disques fixes 8 comportent des ergots 16 correspondant aux cannelures 15 et situés à la périphérie interne des disques 8. Comme le montre la figure 3, les disques 8 sont retenus en rotation par le support 10.

Le support cylindrique 10 se termine, côté roue, par une butée annulaire 17. Le montage des disques s'effectue de la manière suivante. D'abord on fixe sur la butée 17 un premier disque non tournant, à l'aide de vis par exemple. Le support 10 est placé, par rapport au support 9, dans la position représentée à la figure 1. On emboîte le premier disque tournant (celui devant se trouver le plus proche de la roue) dans son support et on le fait glisser jusqu'au fond, c'est-à-dire jusqu'au premier disque non tournant. On emboîte ensuite le deuxième disque non tournant sur son support et on le fait glisser jusqu'au premier disque tournant. On poursuit ainsi en alternant disque tournant et disque non tournant.

Pour pouvoir exercer l'effort de freinage par application des disques fixes sur les disques tournants, un certain nombre d'actionneurs sont prévus. Sur la figure 1, on a représenté deux de ces actionneurs 30. Ils comprennent des pots 18 fixés sur la pièce terminale 11 et des pistons 19 que l'on peut mettre en action à partir de ces pots de manière connue en soi.

Les disques sont montés de façon à ce qu il existe un jeu minimum entre disques lorsque le train roule sans que le système de freinage soit mis en oeuvre. Au démarrage du train, les disques tournants, qui sont très légèrement voilés, se décollent des disques fixes. Au freinage, le premier disque poussé par les pistons, entraîne le déplacement des suivants. L'effort de retenue est ainsi obtenu par la pression simultanée sur les différents disques fixes et tournants.

Lorsque le freinage n'est pas utilisé, il existe entre les pistons des actionneurs et le disque fixe qui leur fait face un jeu qui reprend la somme des jeux entre disques.

La quantité de disques et d'actionneurs est fonction de l'effort de freinage désiré. Par exemple pour le freinage d'un train lancé à 400 km/h, chaque frein pourra comporter 5 ou 6 paires de disques et environ 12 actionneurs à pistons hydrauliques répartis régulièrement. L'effort de freinage est fonction du nombre d'actionneurs.

Le circuit de refroidissement peut avantageusement être constitué comme cela est représenté à la figure 1. Ce circuit se compose alors du trou axial 20, réalisé dans le corps de l'essieu 1 et prolongé par le trou axial 21 réalisé dans la fusée 3 de l'essieu. Le circuit comprend encore un orifice d'entrée 22 du fluide de refroidissement pratiqué dans l'essieu et des orifices de sortie 23 de fluide pratiqués dans la fusée 3. Des orifices d'évacuation 24, 25 du fluide de refroidissement vers l'extérieur sont prévus dans les supports cylindriques 9 et 10. Le flasque 12 peut être également percés de trous 26 facilitant la circulation du fluide.

Le fluide de refroidissement pourra donc circuler selon le circuit fléché représenté sur la figure 1. Les roulements sont donc refroidis de la meilleure façon possible, par l'intermédiaire de la fusée d'une part et par l'intermédiaire du moyeu de la roue d'autre part.

La disposition des disques dans l'espace existant entre les deux supports cylindriques et leur relatif éloignement de l'arrivée de fluide de refroidissement contribue à constituer un puits de chaleur pour les disques, ce qui permet de conserver une température moyenne permettant un freinage efficace lorsque les disques fixes sont appliqués sur les disques tournants.

Le fluide de refroidissement peut avantageusement être de l'air que l'on fait circuler de manière forcée dans le circuit de refroidissement. On peut alors utiliser de l'air comprimé disponible à partir d'un compresseur utilisé pour d'autres fonctions.

La mise en fonction du circuit de refroidissement peut se faire de manière automatique lors du freinage.

## Revendications

1. Système de freinage pour véhicule ferroviaire dont les bogies sont à essieux fixes et à roues indépendantes, le freinage étant du type frein à disque, caractérisé en ce que chaque frein comporte des disques multiples comprenant des disques tournants (7) solidaires de la roue (2) à freiner et des disques fixes (8) solidaires de l'essieu (1) portant la roue à freiner, le freinage étant obtenu par application des disques fixes sur les disques tournants, le système comprenant également un circuit de refroidissement permettant de dissiper l'énergie thermique engendrée par le freinage, le refroidissement étant obtenu par circulation forcée d'un fluide dans le circuit.

2. Système de freinage selon la revendication 1, caractérisé en ce que les disques tournants (7) sont rendus solidaires de la roue (2) par l'intermédiaire d'un support cylindrique (9) fixé sur la roue, les axes de la roue et du support de disques tournants étant confondus.

3. Système de freinage selon l'une des revendication 1 ou 2, caractérisé en ce que les disques fixes (8) sont rendus solidaires de l'essieu (1) par l'intermédiaire d'un support cylindrique (10) fixé sur l'essieu, les axes de l'essieu et du support de disques fixes étant confondus.

4. Système de freinage selon les revendications 2 et 3 prises ensemble, caractérisé en ce que le support (10) de disques fixes est placé à l'intérieur du support de disques mobiles (9), les disques (7, 8) étant disposés dans l'espace compris entre les deux supports.

5. Système de freinage selon l'une des revendications 3 ou 4, caractérisé en ce que, l'essieu (1) comportant une fusée rapportée (3), le support (10) de disques fixes (8) est fixé sur la fusée rapportée (3).

6. Système de freinage selon l'une quelconque des revendications 3 à 5, caractérisé en ce que le support (10) de disques fixes (8) supporte également des actionneurs (30) permettant l'application des disques fixes (8) sur les disques tournants (7).

7. Système de freinage selon l'une quelconque des revendications 1 à 6, caractérisé en ce que le circuit de refroidissement comporte un trou axial (20) réalisé dans l'essieu (1) et amenant ledit fluide vers les disques.

8. Système de freinage selon l'une quelconque des revendications précédentes, caractérisé en ce que le fluide est de l'air.

## Claims

1. A braking system for a railway vehicle having bogies which have fixed axles and independent wheels, the braking being of the disk-brake type, said braking system being characterized in that each brake includes multiple disks comprising rotary disks (7) secured to the wheel (2) to be braked and fixed disks (8) secured to the axle (1) carrying the wheel to be braked, braking being obtained by pressing the fixed disks against the rotary disks, the system also including a cooling circuit enabling the heat energy generated by braking to be dissipated, cooling being obtained by a forced flow of fluid through the circuit.

2. A braking system according to claim 1, characterized in that the rotary disks (7) are secured to the wheel (2) via a cylindrical support (9) fixed to the wheel, with the axis of the wheel coinciding with the axis of the rotary disk support.

3. A braking system according to claim 1 or 2, characterized in that the fixed disks (8) are secured to the axle (1) via a cylindrical support (10) fixed to the axle, with the axis of the axle coinciding with the axis of the fixed disk support.

4. A braking system according to claims 2 and 3 together, characterized in that the fixed disk support (10) is placed inside the moving disk support (9), the disks (7, 8) being disposed in the space lying between the two supports.

5. A braking system according to claim 3 or 4, characterized in that the axle (1) has an attached stub (3), and in that the fixed disk support (10) is fixed to the attached stub (3).

6. A braking system according to any one of claims 3 to 5, characterized in that the fixed disk support (10) also supports actuators (30) for pressing the fixed disks (8) against the rotary disks (7).

7. A braking system according to any one of claims 1 to 6, characterized in that the cooling circuit includes an axial hole (20) made through the axle (1) and conveying said fluid towards the disks.

8. A braking system according to any preceding claim, characterized in that the fluid is air.

## Patentansprüche

1. Bremssystem für ein Schienenfahrzeug, dessen Drehgestelle feste Radachsen und unabhängige Räder aufweisen, wobei die Bremse eine Scheibenbremse ist, dadurch gekennzeichnet, daß jede Bremse Mehrfachscheiben aufweist, die mit dem zu bremsenden Rad (2) verbundene drehende Scheiben (7) und mit der das zu bremsende Rad tragenden Radachse (1) verbundene nicht drehende Scheiben (8) enthalten, wobei die Bremsung durch Anlegen der festen Scheiben an die drehenden Scheiben erhalten wird, daß das System weiter einen Kühlkreis aufweist, der es erlaubt, die beim Bremsen erzeugte Wärmeenergie abzuführen, wobei die Abkühlung durch erzwungene Zirkulation eines Fluids im Kühlkreis erhalten wird.

2. Bremssystem nach Anspruch 1, dadurch gekennzeichnet, daß die drehenden Scheiben (7) über einen auf dem Rad befestigten zylindrischen Träger (9) mit dem Rad (2) verbunden werden, wobei die Achse des Rads und die des Trägers der drehenden Scheiben zusammenfallen.

3. Bremssystem nach einem der Ansprüche 1 oder 2, dadurch gekennzeichnet, daß die nicht drehenden Scheiben (8) über einen an der Radachse befestigten zylindrischen Träger (10) mit der Radachse (1) verbunden werden, wobei die Achse der Radachse und die des Trägers der nicht drehenden Scheiben zusammenfallen.

4. Bremssystem nach den Ansprüchen 2 und 3, dadurch gekennzeichnet, daß der Träger (10) der nicht drehenden Scheiben im Inneren des Trägers der drehenden Scheiben (9) angeordnet ist, wobei die Scheiben (7, 8) sich im Raum zwischen den beiden Trägern befinden.

5. Bremssystem nach einem der Ansprüche 3 oder 4, dadurch gekennzeichnet, daß die Radachse (1) einen angesetzten Achsschenkel (3) enthält und der Träger (10) der festen Scheiben (8) auf dem angesetzten Achsschenkel (3) befestigt ist.

6. Bremssystem nach einem beliebigen der Ansprüche 3 bis 5, dadurch gekennzeichnet, daß der Träger (10) der nicht drehenden Scheiben (8) weiter Betätigungsorgane (30) trägt, die das Anlegen der nicht drehenden Scheiben (8) an die drehenden Scheiben (7) ermöglichen.

7. Bremssystem nach einem beliebigen der Ansprüche 1 bis 6, dadurch gekennzeichnet, daß der Kühlkreis einen axialen Kanal (20) aufweist, der in der Radachse (1) verläuft und das Fluid zu den Scheiben bringt.

8. Bremssystem nach einem beliebigen der vorhergehenden Ansprüche, dadurch gekennzeichnet, daß das Fluid Luft ist.
